# FASCICULE DE BREVET EUROPEEN

(11) **EP 3 717 444 B1**
(45) Date de publication et mention de la délivrance du brevet: **01.01.2025**
(21) Numéro de dépôt: 18814543.7
(22) Date de dépôt: 30.11.2018
(51) Int. Cl.: C05D 1/00, C05F 5/00

(54) **PROCÉDÉ DE VALORISATION DE SELS DE POTASSIUM COPRODUITS DE PROCÉDÉS DE FERMENTATION**
VERFAHREN ZUR VERWERTUNG VON KALIUMSALZEN ALS KOPRODUKTE AUS FERMENTATIONSVERFAHREN
METHOD FOR VALORISING POTASSIUM SALTS COPRODUCED FROM FERMENTATION METHODS

(30) Priorité: 30.11.2017 FR 1761410
(43) Date de publication de la demande: 07.10.2020
(73) Titulaire: Afyren, 63000 Clermont-Ferrand (FR)
(72) Inventeur: PESSIOT, Jérémy, Jean-Paul, 58400 La Charite Sur Loire (FR); ROUSSEL, Michael, Frédéric, Pierre, 63000 Clermont-Ferrand (FR); BOST, Aurélien, Antoine, 63000 Clermont-Ferrand (FR)
(74) Mandataire: Icosa
(86) Numéro de dépôt international: PCT/EP2018/083122
(87) Numéro de publication internationale: WO 2019/106141

(56) Documents cités:
- EP-A1- 0 350 355
- EP-A1- 1 870 474
- EP-A2- 0 411 780
- WO-A1-97/47559
- FR-A1- 2 573 088
- DATABASE BIOSIS [online] BIOSCIENCES INFORMATION SERVICE, PHILADELPHIA, PA, US; October 2005 (2005-10-01), DA SILVA GERVASIO P ET AL: "Ethanolic fermentation of sucrose, sugarcane juice and molasses by Escherichia coli strain KO11 and Klebsiella oxytoca strain P2", XP002788658, Database accession no. PREV200600439103
- DA SILVA GERVASIO P ET AL: "Ethanolic fermentation of sucrose, sugarcane juice and molasses by Escherichia coli strain KO11 and Klebsiella oxytoca strain P2", BRAZILIAN JOURNAL OF MICROBIOLOGY, vol. 36, no. 4, October 2005 (2005-10-01), pages 395 - 404, XP002788658
- DATABASE BIOSIS [online] BIOSCIENCES INFORMATION SERVICE, PHILADELPHIA, PA, US; October 2005 (2005-10-01), DA SILVA GERVASIO P ET AL: "Ethanolic fermentation of sucrose, sugarcane juice and molasses by Escherichia coli strain KO11 and Klebsiella oxytoca strain P2", XP002788658, Database accession no. PREV200600439103
- BRAZILIAN JOURNAL OF MICROBIOLOGY, vol. 36, no. 4, October 2005 (2005-10-01), pages 395 - 404, ISSN: 1517-8382

## Description

### DOMAINE DE L'INVENTION

La présente invention concerne un nouveau procédé de production d'un mélange de sels de potassium, en particulier de syngenite et d'arcanite, comme sous-produit d'un procédé de fermentation via des microorganismes.

### ETAT DE LA TECHNIQUE

De nombreux engrais à base de sels de potassium sont connus et employés depuis des millénaires. Certains sels de potassium sont d'origine naturelle, comme la syngenite et l'arcanite. La syngenite (K₂Ca(SO₄)₂.H₂O) est un sel de sulfate peu commun qui se trouve à l'état naturel sous forme de druse, de dépôts d'évaporation marine ou dans des veines de champs géothermiques. Elle peut être fabriquée industriellement par mélange de sulfate de potassium avec du sulfate de calcium en phase aqueuse (US 3 334 988). Elle peut être employée en mélange avec la struvite K pour la préparation de matériaux de construction (US 2017/0008804). L'arcanite (K₂SO₄) est également un minéral assez rare de la famille des sulfates, que l'on trouve également comme dépôt d'évaporation dans les champs géothermiques. Elle a été décrite comme pouvant participer à la préparation d'engrais, pressée en mélange avec de la mélasse (US 2017/129823) parmi d'autres sels comme la kiesérite (MgSO₄.H₂O), la langbeinite (K₂SO₄.2MgSO₄) et surtout la polyhalite (K₂SO₄.MgSO₄.2CaSO₄.2H₂O).

Ces minéraux peuvent être employés comme engrais mais leur origine naturelle, minérale, associée à d'autres minéraux, comme le chlorure de sodium, nécessite des traitements coûteux pour les rendre compatible avec un usage agricole.

Il est donc intéressant de trouver une nouvelle source de sels de sulfate susceptible d'apporter des ions calcium et potassium, et directement compatibles avec un usage comme engrais agricole.

La précipitation de sels de potassium à pH neutre par l'ajout d'une base à des mélanges acides effluents de procédés d'extractions de produits de biomasses, notamment de l'industrie sucrière, est décrite dans l'état de la technique (FR 2 573 088, NL 9 200 402, NL 9 200 403, WO 97/47557).

Les techniques de fermentation, via des microorganismes pour la production de produits chimiques, notamment de produits de commodités à partir d'une biomasse sont aujourd'hui en plein essor, comme alternative industrielle à la pétrochimie. Or, les méthodes de traitement des biomasses pour en extraire les produits désirés (ou encore « produits principaux ») sont génératrices de multiples produits secondaires qu'il serait intéressant de pouvoir valoriser.

Les inventeurs ont mis en évidence que le traitement à l'acide des fractions liquides provenant du moût de fermentation permettait d'éliminer par précipitation des mélanges de sels de potassium à fort potentiel pour un usage comme engrais en agriculture tout en facilitant l'extraction des produits chimiques produits par la fermentation de la biomasse.

### EXPOSE DE L'INVENTION

La présente invention concerne donc un procédé de production d'acides organiques volatils et de sels de potassium par traitement d'un jus de fermentation comprenant des sels d'acides organiques volatils sous forme de sels de potassium, ledit jus de fermentation provenant d'un procédé de fermentation pour la production d'acides organiques volatils en milieu de fermentation à pH régulé par l'ajout d'une base comprenant de la potasse, caractérisé en ce que le procédé de production d'acides organiques volatils et de sels de potassium comprend :- l'ajout d'un acide fort au jus de fermentation pour former un jus de fermentation acide, ledit acide étant ajouté en quantité suffisante pour entraîner la précipitation du mélange de sels de potassium,- puis la séparation du mélange de sels de potassium solide du jus de fermentation acide et la récupération des acides organiques volatils par séchage du mélange de sels de potassium précipité, et- la récupération i) d'une part les acides organiques volatils entrainés avec les vapeurs de séchage et ii) d'autre part les sels de potassium séchés.

L'invention est particulièrement adaptée pour être mis en oeuvre sur un procédé de fermentation en milieu de fermentation à pH régulé par l'ajout de potasse (hydroxyde de potassium), en particulier pour un procédé de fermentation sur des milieux complexes à base de biomasse fermentescible comprenant par exemple des sous-produits de l'industrie sucrière comme la pulpe de betterave à sucre, la mélasse de betterave ou de canne à sucre.

Elle est plus particulièrement adaptée pour des jus de fermentation de pH neutre ou légèrement acide ou basique, en particulier dans un procédé de production d'acides organiques par fermentation.

De manière avantageuse, les sels de potassium solides obtenus comprennent également jusqu'à 20%, voire 30% en poids de matière organique.

### DESCRIPTION DES FIGURES

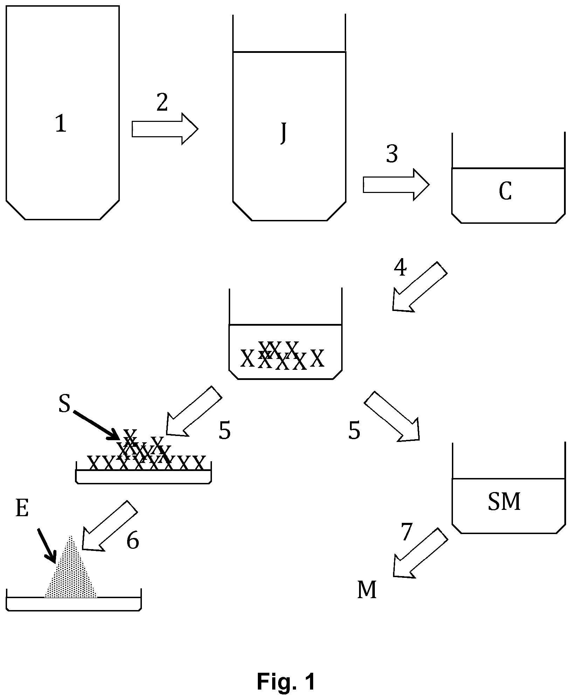

La figure 1 représente une vue schématique d'un procédé de fermentation pour la préparation d'un produit principal avec l'étape de précipitation du mélange de sels de potassium selon l'invention. L'étape 1 est la fermentation anaérobie, avec l'ajout de potasse pour contrôler le pH. L'étape 2 est la séparation des solides et des liquides afin de récupérer le jus de fermentation. L'étape 3 est l'étape de concentration par évaporation de l'eau dans un évaporateur. L'étape 4 est celle de l'acidification selon l'invention avec l'ajout d'acide sulfurique concentré dans le jus concentré avec précipitation des sels de potassium. L'étape 5 est celle de séparation des sels de potassium solides (S) de la solution contenant les molécules d'intérêt (SM), par décantation/centrifugation. L'étape 6 est celle de séchage et broyage des sels de potassium solides (S) pour obtenir un engrais en poudre selon l'invention (E). L'étape 7 est celle de récupération des molécules d'intérêt (M) à partir de la solution (SM).

### DESCRIPTION DETAILLEE DE L'INVENTION

La présente invention concerne donc un procédé de production d'acides organiques volatils et de sels de potassium par traitement d'un jus de fermentation comprenant des sels d'acides organiques volatils sous forme de sels de potassium, ledit jus de fermentation provenant d'un procédé de fermentation pour la production d'acides organiques volatils en milieu de fermentation à pH régulé par l'ajout d'une base comprenant de la potasse, caractérisé en ce que le procédé de production d'acides organiques volatils et de sels de potassium comprend :- l'ajout d'un acide fort au jus de fermentation pour former un jus de fermentation acide, ledit acide étant ajouté en quantité suffisante pour entraîner la précipitation du mélange de sels de potassium,- puis la séparation du mélange de sels de potassium solide du jus de fermentation acide et la récupération des acides organiques volatils par séchage du mélange de sels de potassium précipité, et- la récupération i) d'une part les acides organiques volatils entrainés avec les vapeurs de séchage et ii) d'autre part les sels de potassium séchés.

Les procédés de fermentation pour la production de produits chimiques, en particulier de produits de commodités, désignés par « produits principaux » ou « produit principal », comprennent généralement une étape de fermentation via des microorganismes dans un milieu de culture liquide comprenant une source de carbone appropriée pour la croissance des microorganismes de manière à générer une biomasse de forte densité qui produit les produits de commodité recherchés, par la consommation de la source de carbone et d'autres nutriments dans le milieu de culture.

Le jus de fermentation provient de la séparation en fin de culture des particules insolubles du moût de fermentation. La séparation de ces particules insolubles du moût de fermentation est une étape usuelle bien connue de l'homme du métier, mise en oeuvre par toute méthode de séparation solide/liquide connue et adaptée au milieu de culture employé, à la méthode de culture et aux produits principaux préparés. Le jus de fermentation peut le cas échéant être un jus clarifié.

Le jus de fermentation est une solution comprenant les produits principaux dont la biosynthèse est recherchée, des matières organiques solubles et des sels organiques ou minéraux solubles, et des ions potassium.

L'isolation et la purification des produits principaux nécessitent leur séparation de toutes ces autres matières solubles, par toutes techniques usuelles seules ou combinées, telles que les extractions liquide/liquide, la distillation, la précipitation, etc.

L'ajout d'un acide fort dans le jus de fermentation entraine la précipitation des sels de potassium et des matières minérales et organiques insolubles à pH acide, comme des protéines, des acides aminés, et autres matières organiques.

Le procédé selon l'invention est particulièrement adapté pour être mise en oeuvre sur un jus de fermentation d'un procédé de fermentation dont le produit principal, ou les produits principaux sont solubles à pH acide. Le procédé selon l'invention est particulièrement adapté pour la valorisation de coproduits d'un procédé de fermentation mis en oeuvre pour produire des acides organiques comme produits principaux.

De manière préférentielle, le jus de fermentation comprend des acides organiques comme produits principaux du procédé de fermentation.

Les milieux de culture comprennent généralement des macroéléments et des microéléments, bien connus de l'homme du métier, susceptibles d'être apportés par des produits d'origine végétale, animale ou microbiennes, comme des extraits de levures.

Ces milieux de culture contiennent en particulier des sels de potassium, tels que KH₂PO₄, K₂HPO₄, K₂SO₄, KNOs, etc.

Les microorganismes peuvent êtres des bactéries, des archaebactéries, des eucaryotes ou des mélanges de plusieurs microorganismes.

Les produits de commodité préparés sont généralement des molécules organiques de bas poids moléculaire habituellement issus de la pétrochimie et employés comme solvants ou comme monomères de polymérisation, tels que les alcools organiques, les acides organiques ou les acides aminés. Les produits préparés peuvent aussi être des molécules organiques plus complexes, selon le microorganisme employé ou le mélange de microorganismes employés.

Selon le produit recherché, la culture peut être réalisée en mode aérobie, micro-aérobie ou anaérobie.

La source de carbone peut être une source simple, comme le glucose ou le fructose, assimilable par de nombreux microorganismes, ou encore une source complexe de biomasse fermentescible comme des sous-produits de l'industrie sucrière comme la pulpe de betterave à sucre, les mélasses de betterave à sucre ou de canne à sucre, ou leurs mélanges en toutes proportions.

La croissance des microorganismes en consommant les nutriments du milieu de culture et en générant les produits principaux peut entraîner des variations de pH, généralement une acidification. Le pH peut alors être régulé par l'ajout d'une base, en particulier de la potasse.

Selon l'invention on utilise « potasse » pour désigner l'hydroxyde de potassium. Il est entendu que toute base comprenant essentiellement de l'hydroxyde de potassium peut être employée, et notamment toute base minérale employée dans le domaine de la fermentation industrielle, notamment la potasse.

Le milieu de fermentation est neutralisé et le pH du jus de fermentation est généralement neutre ou légèrement acide ou basique selon la quantité de base ajoutée, c'est à dire allant de 5 à 9, de préférence d'au moins 6, plus préférentiellement d'environ de 6 à 8.

Le procédé selon l'invention est particulièrement adapté pour être mis en oeuvre sur un procédé de fermentation en milieu de fermentation à pH régulé par l'ajout d'une base comprenant de la potasse. C'est le cas en particulier pour des procédés de préparation d'acides organiques qui nécessitent une neutralisation des acides produits qui se trouvent essentiellement en solution sous forme de sels de potasse et le cas échéant d'une autre basse comme un sel d'ammonium si de l'ammoniaque est également employée.

Ces acides organiques sont plus particulièrement des acides organiques volatils, comme les acides acétique, butyrique, propionique, isobutyrique, isovalérique, valérique, caproïque et leurs mélanges.

De manière avantageuse, le potassium dans le jus de fermentation provient pour l'essentiel de la potasse (KOH) ajoutée en cours de procédé pour réguler le pH.

Selon une première variante du procédé selon l'invention, la potasse est employée seule. Selon une autre variante du procédé selon l'invention, la potasse peut être associée à une autre base, comme l'ammoniaque (NH₄OH). L'ajout d'ammoniaque à la potasse va résulter en un sel précipité enrichi en azote, utilisable comme engrais.

Le procédé selon l'invention est particulièrement adapté pour être mis en oeuvre sur le jus de fermentation obtenu à partir d'un moût de fermentation, résultat d'un procédé de culture en milieu liquide avec une source de carbone issue de biomasse fermentescible comme par exemple les sous-produits de l'industrie sucrière, en particulier la pulpe de betterave à sucre, les mélasses de betterave à sucre ou de canne à sucre, de préférence la pulpe de betterave à sucre et de mélasses et leurs mélanges en toutes proportions, et dont le pH est régulé par l'ajout de potasse. Le procédé selon l'invention est plus particulièrement adapté pour le traitement de jus de fermentation d'un procédé de fermentation anaérobie en milieu liquide avec de la pulpe de betterave à sucre, de la mélasse ou leurs mélanges en toutes proportions. Dans une variante de l'invention, le milieu de culture comprend également de la vinasse dans différentes proportions, notamment pour apporter l'eau du milieu liquide.

De tels procédés sont connus de l'état de la technique, notamment décrits dans les demandes de brevet WO 2016/135396, WO 2016/135397, WO 2016/012701, WO 2017/013335, WO 2015/0536683, WO 2014/100424 et WO 2010/047815.

Généralement, la quantité d'ions potassium dans le jus de fermentation est de 0,01 à 1 M préférentiellement de 0,05 à 0,5 M, avantageusement de plus de 0,1 M, voire de plus de 0,2 M.

Selon la concentration en ions potassium dans le jus de fermentation, celui-ci sera concentré selon les méthodes usuelles de l'homme du métier, en particulier par évaporation de l'eau.

S'agissant d'un procédé de valorisation de coproduits des procédés de fermentation, l'étendue de la concentration et les conditions opératoires du procédé employé dépendront d'abord des produits principaux recherchés, les conditions de valorisation des coproduits ne devant pas interférer de manière substantielle avec le rendement en ces produits principaux.

Après précipitation, le mélange de sels de potassium est séparé du jus acidifié, puis le cas échéant séché et/ou broyé, par toutes méthodes usuelles connues de l'homme du métier de filtration, de séchage et de broyage.

Selon un mode particulier de réalisation de l'invention, la séparation du mélange de sels de potassium solide du jus de fermentation acidifié est faite par séchage. Avantageusement, les composés chimiques produits par fermentation sont entrainés avec les vapeurs de séchage, pour être ensuite récupérées par condensation desdites vapeurs.

Le mélange de sels de potassium précipité comprend
- de 20 à 70% en ions potassium, préférentiellement de 30 à 60%,
- de 5 à 20% de matière organique,

les pourcentages étant donnés en g par rapport au poids total de mélange de sels séchés.

Le mélange de sel ci-dessus peut aller jusqu'à 25% voire jusqu'à 30% de matière organique.

La teneur en potassium est exprimée par rapport à une teneur en élément K et/ou en K₂O.

Le mélange de sels de potassium précipité peut comprendre également des ions calcium, magnésium, fer, et notamment des traces d'arsenic, de cadmium, de chrome, de cuivre, de mercure, de molybdène, de nickel, de plomb, de sélénium et de zinc.

Selon un mode particulier de réalisation de l'invention, le mélange de sels de potassium précipité comprend jusqu'à 10% de calcium, avantageusement jusqu'à 7%.

Selon un autre mode de réalisation de l'invention, il peut comprendre au moins 0,0001% de zinc, avantageusement au moins 0,0003% de zinc, plus avantageusement jusqu'à 0,005% de zinc, de préférence entre 0,0003% et 0,003 % de zinc.

En particulier, le mélange de sels de potassium précipité selon l'invention comprend
- de 20 à 70% en ions potassium, préférentiellement de 30 à 60%,
- de 5 à 20% de matière organique,
- de 0 à 10% de calcium, et
- de 0 à 0,005% de zinc, préférentiellement entre 0,0003% à 0,003% de zinc.

L'acide fort ajouté au jus de fermentation, et plus particulièrement au jus de fermentation concentré, est choisi parmi l'acide sulfurique, l'acide phosphorique, l'acide nitrique, l'acide chlorhydrique et leurs mélanges en toutes proportions.

La teneur en soufre, en phosphate du mélange de sels de potassium précipité selon l'invention dépendra de l'acide employé.

L'homme du métier saura déterminer la quantité d'acide nécessaire à une bonne précipitation, dans le contexte du procédé de préparation de produits principaux, c'est à dire de manière à ne pas affecter le rendement et la qualité desdits produits principaux.

En général, on ajoutera la quantité d'acide nécessaire pour obtenir un jus de fermentation, en particulier concentré, acidifié à un pH inférieur à 5, pouvant aller à 3, voire moins de 3. Dans le cas où les produits principaux sont des acides organiques, il sera avantageux d'acidifier le jus de fermentation, éventuellement concentré, à un pH inférieur à 4, de préférence d'environ 3.

Selon un mode préféré de réalisation de l'invention, l'acide employé est de l'acide sulfurique. L'homme du métier saura choisir un acide sulfurique approprié pour la mise en oeuvre de son procédé industriel, généralement un acide sulfurique concentré à plus de 90%, avantageusement à plus de 95%, plus préférentiellement à plus de 98%.

Le mélange de sels de potassium précipité obtenu a avantageusement la composition suivante (% en poids) :

| | % | % Préférés |
|---|---|---|
| Azote total | 0,5 - 5 | 1 - 1,5 |
| Carbone organique | 1 - 10 | 5 - 8 |
| P2O5 total | 0,1 - 5 | 0,3 - 0,5 |
| K2O total | 30 - 50 | 40 - 50 |
| CaO total | 1 - 10 | 4 - 7 |
| MgO total | 0,05 - 0,5 | 0,15 - 0,20 |
| Sulfate totaux (SO3) | 25 - 55 | 34 - 42 |
| Zinc total | 0,0001 - 0,005 | 0,0003 - 0,003 |
| Eau | 0 - 15 | 0 - 5 |

Le total peut être différent de 100% du fait de la perte de certains éléments pour mettre en oeuvre les méthodes d'analyse.

L'homme du métier connaît les méthodes d'analyse des sels précipités, en particulier la méthode de fluorescence des rayons X (FX) ou bien par diffraction des rayons X (DRX).

L'analyse peut se faire sur le précipité avant ou après séchage, ou encore après broyage.

Avec l'ajout d'acide sulfurique dans le jus de fermentation, notamment concentré, d'un procédé de fermentation dont le pH est régulé par l'ajout de potasse, on obtient généralement un mélange dont les sels de potassium sont essentiellement composés d'arcanite et de syngénite. Le rapport pondéral arcanite/syngénite dans le mélange de sels de potassium peut aller de 5/95 à 70/30. Ce rapport pondéral dépendra généralement de la source de carbone employée. Dans le cas d'une source de biomasse fermentescible complexe comme de la pulpe de betterave à sucre, le rapport pondéral ira généralement de 5/95 à 25/75. Dans le cas d'une source de biomasse fermentescible complexe comme la mélasse, le rapport pondéral ira généralement de 30/70 à 70/30.

Le procédé selon l'invention peut être mis en oeuvre sur des jus de fermentation d'un seul « lot » de fermentation (batch). Il peut aussi être mis en oeuvre sur un mélange de jus de fermentation de plusieurs lots de fermentations réalisés dans des conditions similaires ou différentes. Le procédé selon l'invention est avantageusement mis en oeuvre sur un mélange de lots de jus de fermentation provenant d'une fermentation en milieu liquide avec d'une part de la mélasse de betterave à sucre ou de canne à sucre comme source de carbone complexe et d'autre part de la pulpe de betterave à sucre.

Le procédé de préparation de mélanges de sels de potassium précipités est avantageusement un procédé de valorisation de coproduits de procédés de fermentation réalisés à un stade industriel. De fait, le procédé est mis en oeuvre sur des volumes de jus de fermentation qui vont de préférence de centaines de litres à plusieurs milliers de m³.

Lorsque l'on mélange des jus de fermentation de plusieurs lots, il est avantageux de le faire sur des jus concentrés, pour diminuer les volumes à traiter, et les coûts afférents.

Le mélange de sels obtenus est avantageusement broyé de manière homogène pour ses usages ultérieurs. De manière avantageuse, le broyat a une granulométrie de 50 à 400 µm, en particulier de 100 à 400 µm. On entend par ces valeurs qu'au moins 80% de la poudre passe à travers un tamis de maille compatible à ces dimensions.

Le procédé selon l'invention est particulièrement adapté pour être mis en oeuvre dans un procédé de production d'acides organiques tel que décrit ci-dessus. La fermentation nécessite une neutralisation par l'ajout d'une base, de préférence de la potasse ou un mélange de potasse et d'ammoniaque et le jus de fermentation a un pH neutre ou légèrement acide ou basique selon la quantité de base ajoutée, c'est à dire allant de 5 à 9, de préférence d'au moins 6, plus préférentiellement d'environ de 6 à 8.

Le jus de fermentation est ensuite concentré, qu'il provienne d'un seul lot de fermentation ou d'un mélange de plusieurs lots et l'ajout d'acide se fait dans le jus concentré.

La précipitation des sels de potassium forme une pâte qu'il peut être difficile de séparer du jus acidifié par des méthodes usuelles comme la filtration.

La séparation se fait par séchage du mélange de sels précipités et de jus acide au cours duquel les acides sont entrainés avec les vapeurs.

Il ne reste plus qu'à récupérer les vapeurs condensées pour ensuite isoler et purifier les acides organiques selon les méthodes usuelles de séparation des différentes molécules, notamment par distillation. L'homme du métier connaît et saura choisir les moyens de condensation des vapeurs comme les moyens de séparation des acides organiques les mieux adaptés aux molécules organiques à isoler, cette étape n'étant pas limitante au regard de l'invention.

Les sels de potassium séchés sont traités de leur côté pour la préparation d'un engrais selon les méthodes usuelles décrites précédemment.

L'invention concerne donc également un procédé de traitement d'un jus de fermentation comprenant des sels d'acides organiques tels que définis précédemment sous forme de sels de potassium pour la production d'acides organiques d'une part et de sels de potassium solides d'autre part qui comprend l'ajout d'un acide fort au jus de fermentation en quantité suffisante pour entraîner la précipitation du mélange de sels de potassium, puis le séchage du mélange de sels de potassium précipité pour récupérer d'une part les acides organiques entraînés avec les vapeurs et d'autre part les sels de potassium séchés.

Le procédé est mis en oeuvre sur un jus de fermentation concentré qui comprend entre 0,01 M et 2 M de sels d'acides,

Le mélange de sels précipité obtenu par le procédé selon l'invention peut être formulé pour son utilisation comme engrais dans l'agriculture, employé tel quel ou associé avec d'autres engrais ou autres produits phytosanitaires.

Le mélange d'engrais peut être préparé avec un mélange de plusieurs sels précipités selon l'invention provenant de plusieurs lots de fabrication, le mélange pouvant être fait avant ou après séchage et/ou broyage.

Pour un usage comme engrais, le mélange obtenu par le procédé selon l'invention aura avantageusement une granulométrie inférieure à 315 µm.

Un procédé de fertilisation d'un sol pour la culture de plantes comprenant l'apport d'un engrais comprenant un mélange de sels de potassium solides susceptible d'être obtenu par le procédé tel que défini précédemment, avant, pendant ou après la culture des plantes est également décrit.

L'homme du métier saura identifier les doses usuelles à employer dans les champs pour apporter les quantités nécessaires et suffisantes de potassium avec le mélange de sels précipité selon l'invention.

### EXEMPLES

### Exemple 1

Dans un fermenteur industriel on procède à la fermentation anaérobie mésophile de coproduits organiques dérivés des sucreries tels que des mélasses de betteraves à sucre. Le pH du moût de fermentation est régulé avec de la potasse. En fin de fermentation on récupère le jus de fermentation et on le concentre par évaporation.

Puis pour la récupération et la purification des produits d'intérêt on procède à une acidification du jus de fermentation concentré par ajout de l'acide sulfurique concentré jusqu'à pH 3. Le précipité formé par l'ajout de cet acide est récupéré puis séché et broyé afin d'obtenir un engrais en poudre agronomiquement valorisable.

L'analyse physico-chimique des principaux constituant de l'engrais obtenu est rapportée dans le Tableau ci-dessous. Les pourcentages sont les pourcentages moyens obtenus par l'analyse de plusieurs produits issus de différents jus de fermentation.

| **Analyse physico-chimique** | **Moyenne** | **Unité** | **Variabilité** |
|---|---|---|---|
| **Teneur en eau** | 9,77 | % | *+*/*- 10%* |
| | | | |

| **Eléments majeurs et secondaires** | **Moyenne** | **Unité** | **Variabilité** |
|---|---|---|---|
| Azote total | 1,19 | % | *+*/*- 10%* |
| Carbone organique | 6,4 | % | *+*/*- 10%* |
| Pertes au feu | 13,6 | % | *+*/*- 10%* |
| P2O5 total | 0,41 | % | *+*/*- 10%* |
| K2O total | 33 | % | *+*/*- 10%* |
| CaO total | 5,14 | % | *+*/*- 10%* |
| MgO total | 0,18 | % | *+*/*- 10%* |
| Sulfate totaux (SO3) | 38 | % | *+*/*- 10%* |
| | | | |

| **Eléments Traces Métalliques** | **Moyenne** | **Unité** | **Variabilité** |
|---|---|---|---|
| Zinc total | 0,00205 | % | *+*/*- 10%* |

L'engrais est ensuite employé dans les champs selon les méthodes usuelles en agriculture, la nature du sol et la variété cultivée.

### Exemple 2

Dans un fermenteur industriel on procède à la fermentation anaérobie mésophile de coproduits organiques dérivés de l'industrie sucrière : des mélasses de betteraves à sucre. Le pH du moût de fermentation est régulé à la potasse pour neutraliser la production d'acides organiques volatils. Après la fermentation, le moût est concentré pour obtenir d'une part des condensats et d'autre part un jus de fermentation concentré à pH neutre. Ce jus concentré est ensuite acidifié par l'ajout d'un acide fort, de l'acide sulfurique afin de conduire à la précipitation des sels de potassiums. Pour séparer la phase liquide concentrée contenant les acides organiques volatils et la phase solide constituée principalement des sels de potassiums, on procède à une étape de séchage à une température de 110°C. On récupère ensuite un produit séché constitué des sels de potassiums à destination de l'industrie des engrais pour valorisation agricole ainsi qu'une phase liquide comportant les acides organiques volatils. On sépare finalement ces acides organiques volatils par distillation.

### REFERENCES

FR 2 573 088, NL 9 200 402, NL 9 200 403, WO 97/47557, WO 2010/047815, WO 2014/100424, WO 2015/0536683, WO 2016/012701, WO 2016/135396, WO 2016/135397, WO 2017/013335

## Revendications

1. Procédé de production d'acides organiques volatils et de sels de potassium par traitement d'un jus de fermentation comprenant des sels d'acides organiques volatils sous forme de sels de potassium,
ledit jus de fermentation provenant d'un procédé de fermentation pour la production d'acides organiques volatils en milieu de fermentation à pH régulé par l'ajout d'une base comprenant de la potasse, **caractérisé en ce que** le procédé de production d'acides organiques volatils et de sels de potassium comprend :
- l'ajout d'un acide fort au jus de fermentation pour former un jus de fermentation acide, ledit acide étant ajouté en quantité suffisante pour entraîner la précipitation du mélange de sels de potassium,
- puis la séparation du mélange de sels de potassium solide du jus de fermentation acide et la récupération des acides organiques volatils par séchage du mélange de sels de potassium précipité, et
- la récupération i) d'une part les acides organiques volatils entrainés avec les vapeurs de séchage et ii) d'autre part les sels de potassium séchés.

2. Procédé selon la revendication 1, **caractérisé en ce que** le jus de fermentation provient d'un procédé de fermentation sur des milieux complexes à base de biomasse fermentescible comme des sous-produits de l'industrie sucrière, en particulier choisi parmi la pulpe de betterave à sucre et les mélasses de betteraves et de canne à sucre.

3. Procédé selon l'une des revendications 1 ou 2, **caractérisé en ce que** la teneur en ions potassium dans le jus de fermentation est de 0,01 à 1 M, préférentiellement de 0,05 à 0,5 M, avantageusement de plus de 0,1 M, voire de plus de 0,2 M.

4. Procédé selon l'une des revendications 1 à 3, **caractérisé en ce que** le jus de fermentation est un jus de fermentation concentré.

5. Procédé selon l'une des revendications 1 à 4, **caractérisé en ce que** le jus de fermentation est un mélange de jus de fermentation provenant de plusieurs lots.

6. Procédé selon l'une des revendications 1 à 5, **caractérisé en ce que** les acides organiques volatils sont choisis parmi les acides acétique, butyrique, propionique, isobutyrique, isovalérique, valérique, caproïque et leurs mélanges.

7. Procédé selon l'une des revendications 1 à 6, **caractérisé en ce que** le jus de fermentation comprend entre 0.01M et 2M de sels d'acides.

8. Procédé selon l'une des revendications 1 à 7, **caractérisé en ce que** les acides organiques récupérés sont isolés par distillation.

9. Procédé selon l'une des revendications 1 à 8, **caractérisé en ce que** le mélange de sels de potassium précipité comprend :
- de 20 à 70% en K2O, préférentiellement de 30 à 60%,
- de 5 à 30% de matière organique,
les pourcentages étant donnés en g par rapport au poids total de mélange de sels séchés.

10. Procédé selon l'une des revendications 1 à 9, **caractérisé en ce que** l'acide fort est de l'acide sulfurique.

11. Procédé selon la revendication 10, **caractérisé en ce que** le mélange de sel de potassium comprend un mélange d'arcanite et de syngénite, le rapport pondéral arcanite/syngénite allant de 5/95 à 70/30.

12. Procédé selon l'une des revendications 1 à 11, **caractérisé en ce que** le mélange de sels de potassium solide est broyé.

## Patentansprüche

1. Verfahren zur Herstellung von flüchtigen organischen Säuren und Kaliumsalzen durch Behandlung einer Fermentationsbrühe, die Salze von flüchtigen organischen Säuren in Form von Kaliumsalzen umfasst,
wobei die Fermentationsbrühe aus einem Fermentationsverfahren zur Herstellung von flüchtigen organischen Säuren in einem Fermentationsmedium mit einem pH-Wert stammt, der durch Zugabe einer Base, die Kali umfasst, geregelt wird, **dadurch gekennzeichnet, dass** das Verfahren zur Herstellung von flüchtigen organischen Säuren und Kaliumsalzen umfasst:
- Zugeben einer starken Säure zur Fermentationsbrühe, um eine saure Fermentationsbrühe zu bilden, wobei die Säure in einer Menge zugegeben wird, die ausreicht, um die Ausfällung des Kaliumsalzgemisches zu bewirken,
- anschließend Abtrennen des festen Kaliumsalzgemisches von der sauren Fermentationsbrühe und Gewinnen der flüchtigen organischen Säuren durch Trocknen des ausgefällten Kaliumsalzgemisches, und
- Gewinnen i) einerseits der mit den Trocknungsdämpfen mitgetragenen flüchtigen organischen Säuren und ii) andererseits der getrockneten Kaliumsalze.

2. Verfahren nach Anspruch 1, **dadurch gekennzeichnet, dass** die Fermentationsbrühe aus einem Fermentationsverfahren über komplexe Medien auf Basis von fermentierbarer Biomasse wie Nebenprodukten der Zuckerindustrie stammt, insbesondere ausgewählt aus Zuckerrübenschnitzeln und Zuckerrüben- und Zuckerrohrmelasse.

3. Verfahren nach einem der Ansprüche 1 oder 2, **dadurch gekennzeichnet, dass** der Gehalt an Kaliumionen in der Fermentationsbrühe 0,01 bis 1 M, vorzugsweise 0,05 bis 0,5 M, vorteilhafterweise mehr als 0,1 M, oder sogar mehr als 0,2 M beträgt.

4. Verfahren nach einem der Ansprüche 1 bis 3, **dadurch gekennzeichnet, dass** die Fermentationsbrühe eine konzentrierte Fermentationsbrühe ist.

5. Verfahren nach einem der Ansprüche 1 bis 4, **dadurch gekennzeichnet, dass** die Fermentationsbrühe ein Gemisch von Fermentationsbrühen ist, die aus mehreren Chargen stammen.

6. Verfahren nach einem der Ansprüche 1 bis 5, **dadurch gekennzeichnet, dass** die flüchtigen organischen Säuren ausgewählt sind aus Essig-, Butter-, Propion-, Isobutter-, Isovalerian-, Valerian-, Capronsäure und deren Mischungen.

7. Verfahren nach einem der Ansprüche 1 bis 6, **dadurch gekennzeichnet, dass** die Fermentationsbrühe zwischen 0,01 M und 2 M Säuresalze umfasst.

8. Verfahren nach einem der Ansprüche 1 bis 7, **dadurch gekennzeichnet, dass** die gewonnenen organischen Säuren durch Destillation isoliert werden.

9. Verfahren nach einem der Ansprüche 1 bis 8, **dadurch gekennzeichnet, dass** das ausgefällte Kaliumsalzgemisch umfasst:
- 20 bis 70 % K2O, vorzugsweise 30 bis 60 %,
- 5 bis 30 % organisches Material,
wobei die Prozentanteile in g bezogen auf das Gesamtgewicht des getrockneten Salzgemisches angegeben sind.

10. Verfahren nach einem der Ansprüche 1 bis 9, **dadurch gekennzeichnet, dass** die starke Säure Schwefelsäure ist.

11. Verfahren nach Anspruch 10, **dadurch gekennzeichnet, dass** das Kaliumsalzgemisch ein Gemisch aus Arcanit und Syngenit umfasst, wobei das Gewichtsverhältnis Arcanit/Syngenit von 5/95 bis 70/30 geht.

12. Verfahren nach einem der Ansprüche 1 bis 11, **dadurch gekennzeichnet, dass** das feste Kaliumsalzgemisch gemahlen wird.

## Claims

1. A process for producing volatile organic acids and potassium salts by treating a fermentation juice comprising volatile organic acids salts in the form of potassium salts,
said fermentation juice being obtained from a fermentation process for the production of volatile organic acids in a fermentation medium having a pH regulated by the addition of a base comprising potash, **characterized in that** the process for the production of volatile organic acids and potassium salts comprises:
- the addition of a strong acid to the fermentation juice to form an acidified fermentation juice, said acid being added in an amount sufficient to cause the precipitation of the potassium salt mixture,
- and then the separation of the mixture of solid potassium salts from the acidified fermentation juice and the recovery of volatile organic acids by drying the precipitated mixture of potassium salts, and
- the recovery i) on the one hand of volatile organic acids entrained with the drying vapors, and ii) on the other hand of dried potassium salts.

2. The process according to claim 1, **characterized in that** the fermentation juice comes from a fermentation process on complex media based on fermentable biomass such as by-products of the sugar industry, in particular selected from sugar beet pulp and molasses sugar beet and sugar cane.

3. The process according to one of claims 1 or 2, **characterized in that** the content of potassium ions in the fermentation juice is from 0.01 to 1 M, preferably from 0.05 to 0.5 M, advantageously more than 0.1 M, even more than 0.2 M.

4. The process according to one of claims 1 to 3, **characterized in that** the fermentation juice is a concentrated fermentation juice.

5. The process according to one of claims 1 to 4, **characterized in that** the fermentation juice is a mixture of fermentation juice coming from several batches.

6. The process according to one of claims 1 to 5, **characterized in that** the volatile organic acids are chosen from acetic, butyric, propionic, isobutyric, isovaleric, valeric and caproic acids and mixtures thereof.

7. The process according to one of claims 1 to 6, **characterized in that** the fermentation juice comprises between 0.01M and 2M of acid salts.

8. The process according to one of claims 1 to 7, **characterized in that** the recovered organic acids are isolated by distillation.

9. The process according to one of claims 1 to 8, **characterized in that** the mixture of precipitated potassium salts comprises:
- from 20 to 70% of K2O, preferably from 30 to 60%,
- from 5 to 20% of organic matter,
the percentages being given in g relative to the total weight of the mixture of dried salts.

10. The process according to one of claims 1 to 9, **characterized in that** the strong acid is sulfuric acid.

11. The process according to claim 10, **characterized in that** the potassium salt mixture comprises a mixture of arcanite and syngenite, the arcanite / syngenite weight ratio ranging from 5/95 to 70/30.

12. The process according to one of claims 1 to 11, **characterized in that** the mixture of solid potassium salts is ground.
